# EUROPÄISCHE PATENTSCHRIFT

(11) **EP 1 882 878 B1**
(45) Veröffentlichungstag und Bekanntmachung des Hinweises auf die Patenterteilung: **15.04.2009**
(21) Anmeldenummer: 06015353.3
(22) Anmeldetag: 24.07.2006
(51) Int. Cl.: F16M 7/00, F16M 11/12, F16M 13/02

(54) **Universell einstellbare Halterungsvorrichtung**
Universal adjustable support
Support universel ajustable

(43) Veröffentlichungstag der Anmeldung: 30.01.2008
(73) Patentinhaber: Dambach-Werke GmbH, D-76456 Kuppenheim (DE)
(72) Erfinder: Baumstark, Erwin, 76456 Kuppenheim (DE)
(74) Vertreter: Strobel, Wolfgang

(56) Entgegenhaltungen:
- FR-A1- 2 765 901
- GB-A- 2 272 717
- US-A- 4 662 139

## Beschreibung

Die vorliegende Erfindung betrifft eine universell einstellbare Halterungsvorrichtung, die zur Halterung eines Gegenstandes, insbesondere eines Gehäuses an nicht genau senkrechten oder waagrechten Flächen, insbesondere gewölbten Wänden dient.

Bekanntlich müssen in Tunnels zahlreiche Verkehrszeichen installiert werden, die der Sicherheit des Verkehrs im Tunnel dienen und den Verkehrteilnehmern entsprechende Hinweise (beispielsweise eine Geschwindigkeitsbeschränkung) geben.

Das Besondere bei der Anbringung solcher in einem Rahmen aufgenommenen Verkehrszeichen in einem Tunnel ist, dass sie in der Regel an der gewölbten Wand des Tunnels angebracht werden müssen.

Je größer eine Tunnelröhre gebohrt werden muss, desto teurer ist sie. Demzufolge wird versucht, nur ein Mindestmaß der Röhrengröße zu verwirklichen, wobei der Platzbedarf für die Verkehrsleitsysteme und die Beschilderungen mit eingerechnet werden muss.

Das Patent US 4 662 139 offenbart alle Merkmale des Oberbegriffs des Anspruchs 1.

Aufgabe der vorliegenden Erfindung ist es, eine universell einstellbare Halterungsvorrichtung, insbesondere für die Verwendung an nicht genau senkrechten und/oder waagrechten bzw. an gewölbten Wänden, wie in Tunneln und dergleichen vorzuschlagen, mit der ein minimaler Abstand zur Montagefläche verwirklicht wird.

Diese Aufgabe wird durch die Merkmale des Anspruchs 1 gelöst.

Erfindungsgemäß weist die einstellbare Halterungsvorrichtung mindestens ein Verankerungselement auf, das in einem Elemente, beispielsweise einer gewölbten Tunnelwand verankerbar ist, die die Halterungsvorrichtung trägt. Es sind zwei Rohrstücke vorgesehen, die einen im Wesentlichen gleichen Durchmesser aufweisen, und eine Führungshülse dient als Verbindung der beiden Rohrstücken, wobei ihre Breite geringer als die Gesamtbreite der beiden Rohrstücke ist und sie innerhalb der Rohrstücke angeordnet ist. Eine Zentrierplatte dient zur Zentrierung der Führungshülse bezüglich des Verankerungselements, das bevorzugt als Gewindeanker ausgebildet ist und dient damit auch der Zentrierung der Rohrstücke. Eine mit einer Öffnung versehene Druckplatte ist auf den Gewindeanker aufsteckbar und mit geeigneten Befestigungsmitteln kann sie den zu haltenden Gegenstand gegen den entsprechenden Rand der nächstgelegenen der beiden Rohrhülsen drücken und fixieren, womit die Halterungsvorrichtung an die Montagefläche des Elements fixierbar ist.

Zur optimalen Einstellung der Ausrichtung des zu haltenden Gegenstandes weisen beide Rohrstücke einen ersten ebenen Rand auf, der in einer ersten Ebene liegt, die senkrecht zu der Rohrachse verläuft, und weisen einen zweiten Rand auf, der in einer zweiten Ebene liegt, die schräg bezüglich der ersten Ebene verläuft.

Mithilfe der entsprechenden Anordnung der schrägen Ebenen ist es möglich, eine maximale Neigung des zu haltenden Gegenstandes gegenüber der Montagewand einerseits einzustellen, oder, andererseits, durch kompensatorisches Anordnen der schrägen zweiten Ebenen eine Ausrichtung senkrecht zur Achse des Gewindeankers zu erreichen.

Damit wird vorteilhafterweise mit einfachen Mitteln eine form- und reibschlüssige Halterungsvorrichtung mit drei Einstellebenen erhalten, bei der als besonderer Vorteil der minimale Abstand zur Montagefläche bei gleichzeitig stufenloser Neigungseinstellung verwirklicht wird.

Mit der erfindungsgemäßen Halterungsvorrichtung wird weiterhin der große Vorteil erreicht, dass der damit gehaltene Gegenstand in den drei Raumachsen einstellbar gehalten wird, wodurch eine optimale Ausrichtung des Gegenstandes im Raum erzielbar ist.

Wenn die Schräge der zweiten Ebene bezüglich der ersten Ebene eines jeden der Rohrstücke gleich oder im Wesentlichen gleich ist, ergibt sich der Vorteil, dass nur eine Art von Rohrstücken verwendet werden muss, das heißt pro Halterungsvorrichtung zwei identische Rohrstücke, was zu einer entsprechend günstigereren Fertigung aufgrund von höherer Stückzahl führt.

Vorteilhafterweise sind die Rohrstücke runde Rohrstücke, was eine leichtere Montage ermöglicht. Zur Einstellung der Neigung beziehungsweise des minimalen Abstands zur Montagefläche können die Rohrstücke sowohl gegenüber der Montagefläche als auch gegenüber dem Gegenstand die Neigung eingestellt werden.

Weiterhin ergibt sich eine optimale Einstellungsmöglichkeit, wenn auch die Rohrstücke untereinander verdrehbar sind.

Zum besonders vorteilhaften leichten Verdrehen der Rohrstücke weist eines der Rohrstücke, bevorzugt beide Rohrstücke eine Eingriffsvorrichtung für ein Werkzeug auf. Diese Eingriffseinrichtung kann vorteilhafterweise eine Öffnung in der Wand des Rohrstücks sein, in das ein geeignetes Werkzeug, wie beispielsweise ein Hakenschlüssel eingreifen kann. Durch Ansetzen eines Hakenschlüssels an dem einen Rohrstück und eines weiteren Hakenschlüssels an einem anderen Rohrstück ist es möglich, die beiden Rohrstücke zueinander und gegenüber der Montagewand beziehungsweise dem Gegenstand zu verdrehen und somit auf einfachste Weise eine stufenlose Einstellung zu bewerkstelligen.

Schließlich ist vorteilhaft, dass die Rohrstücke aus Metall oder aus Kunststoff gebildet sein können.

Weitere Merkmale, Einzelheiten und Vorteile der vorliegenden Erfindung ergeben sich aus der nur beispielhaft aufgeführten Beschreibung eines bevorzugten Ausführungsbeispiels der Erfindung unter Bezugnahme auf die beigefügten Zeichnungen. Darin zeigt:
- Fig. 1: in explosionsartiger schematischer Ansicht eine Ausführungsform der erfindungsgemäßen Halterungsvorrichtung;
- Fig. 2: die erfindungsgemäße Halterungsvorrichtung von Fig. 1 in montiertem Zustand;
- Fig. 3: die erfindungsgemäße Halterungsvorrichtung ohne Neigung des zu haltenden Gegenstandes;
- Fig. 5: zwei Hakenschlüssel zum Verdrehen der Rohrstücke; und
- Fig. 6: die erfindungsgemäße Halterungsvorrichtung in der die beiden Hakenschlüssel von Fig. 5 in jeweils eines der Rohrstücke eingreifen.

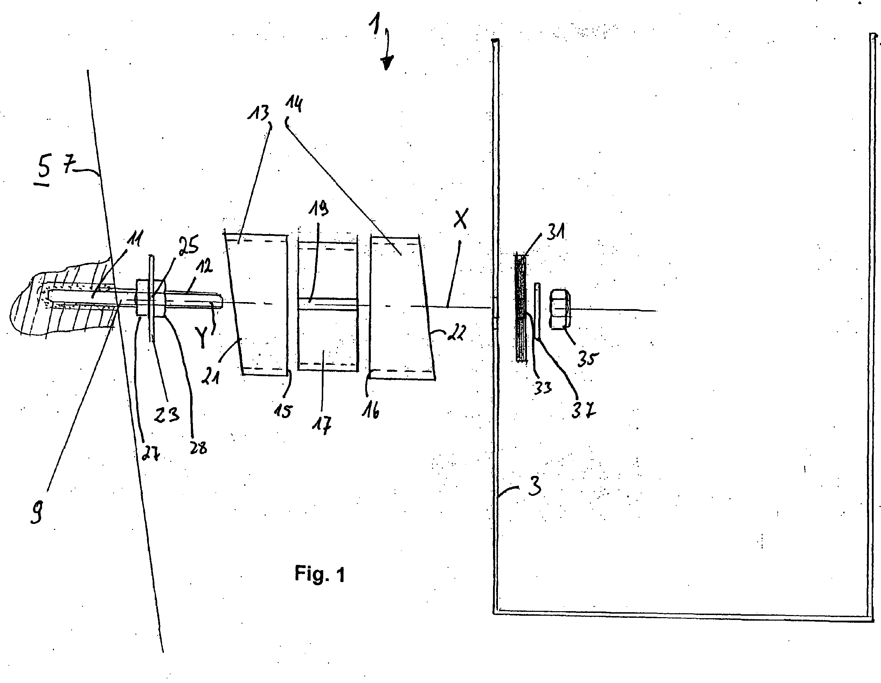

Nachfolgend wird nunmehr unter Bezugnahme auf Fig. 1, die schematisch den Aufbau einer erfindungsgemäßen Halterungsvorrichtung 1 zeigt, diese näher beschrieben.

Die erfindungsgemäße Halterungsvorrichtung 1 dient zur Halterung eines Gegenstandes, insbesondere eines Gehäuses 3, das beispielsweise zur Aufnahme von Verkehrslichtzeichen dient.

Die Halterungsvorrichtung 1 soll in einem bzw. von einem Element 5, wie beispielsweise einer Montagewand 7 gehalten werden. Die Halterungsvorrichtung 1 weist ein Verankerungselement, beispielsweise einen Gewindeanker 9 auf, der einen Gewindebolzen 11 aufweist, der in der Montagewand 7 verankert ist.

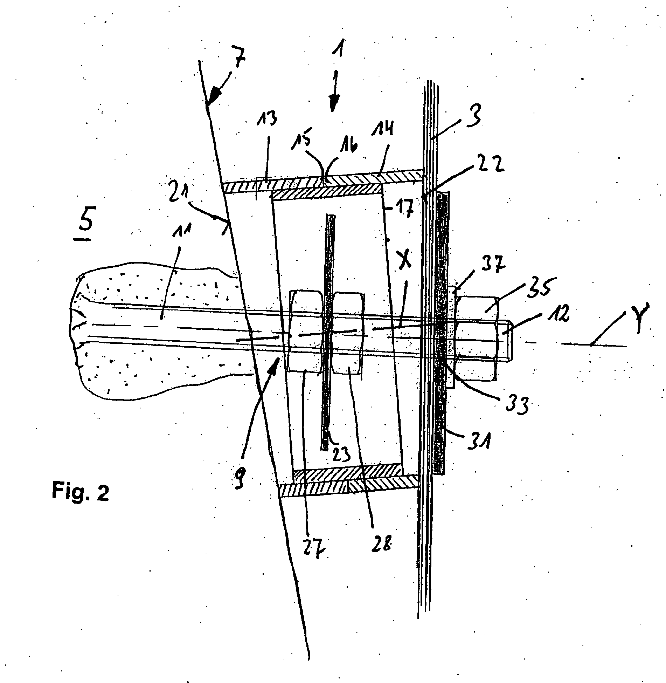

Wie aus Fig. 1 ersichtlich, weist die Halterungsvorrichtung 1 zwei Rohrstücke 13 und 14 auf, deren Wandstärke durch die gestrichelten Linien angegeben ist. Jedes der Rohrstücke weist einen ersten ebenen Rand 15 beziehungsweise 16 auf, die jeweils in einer Ebene liegen, die senkrecht zur Achse X verlaufen, die die Achse der beiden Rohrstücke 13 und 14 ist. In der Explosions-Darstellung von Fig. 1 fällt die Achse X der beiden Rohrstücke 13 und 14 mit der Drehachse Y des Gewindeankers 9 zusammen, wohingegen im montierten Zustand (vgl. Fig. 2) die Achsen X und Y nicht zusammenfallen.

Zur Verbindung der beiden Rohrstücke 13 und 14 für deren Montage und Verbindung mit dem Gewindeanker 9 ist eine Führungshülse 17 vorgesehen, die im bevorzugten Ausführungsbeispiel einen parallel zur Achse X verlaufenden Schlitz 19 aufweist.

Wie weiterhin aus Fig. 1 ersichtlich, weist jedes Rohrstück 13, 14 einen zweiten Rand 21 beziehungsweise 22 auf, der jeweils in einer Ebene liegt, die zu den Ebenen des ersten Randes schräg verlaufen. Beispielsweise kann die Schräge einen Neigungswinkel von 7,5° aufweisen, so dass sich eine zusammengesetzte maximale Schräge von 15° erzielen lässt. Selbstverständlich können je nach Anwendungsfall andere Neigungswinkel vorgesehen werden.

Wie weiterhin aus Fig. 1 ersichtlich, ist an dem Gewindeanker 9 eine Zentrierplatte 23 vorgesehen, die dazu dient, die Führungshülse 17 bezüglich des Gewindeankers 9 zu zentrieren. Die Zentrierungsplatte 23 weist eine zentrale Mittenöffnung 25 für den Hindurchtritt des Gewindeankers 9 auf. Die Zentrierungsplatte 23 ist vorzugsweise auf einfache Weise mittels Muttern 27 und 28 festgelegt.

Weiterhin weist die erfindungsgemäße Halterungsvorrichtung 1 eine Druckplatte 31 auf, die ihrerseits eine zentrale Öffnung 33 für den Hindurchtritt eines Gewindeabschnitts 12 des Gewindeankers 9 aufweist. Zum Fixieren des Gehäuses 3 an den zweiten Rand 22 des Rohrstücks 14 dient eine Mutter 35, die auf den Gewindeabschnitt 12 aufschraubbar ist, und zu dessen Sicherung noch eine Sicherheitsscheibe 37 vorgesehen ist.

Fig. 2 zeigt schematisch die erfindungsgemäße Halterungsvorrichtung in montiertem Zustand. Gleiche Elemente sind in Fig. 2 mit den gleichen Bezugsziffern bezeichnet. Der Außendurchmesser der Führungshülse 17 ist im nichtmontierten Zustand leicht größer als der Innendurchmesser der Rohrstücke 13 und 14. Beim Einführen in eines der Rohrstücke wird die Führungshülse 17 zusammengedrückt und federt, nachdem sie in das Rohrstück eingesetzt wurde wieder auf und kommt in reibschlüssige Anlage an die Innenfläche des Rohrstücks. Wie ersichtlich schneiden sich die Achse Y des Gewindeankers 9 und die Achse X der Rohrstücke 13 und 14.

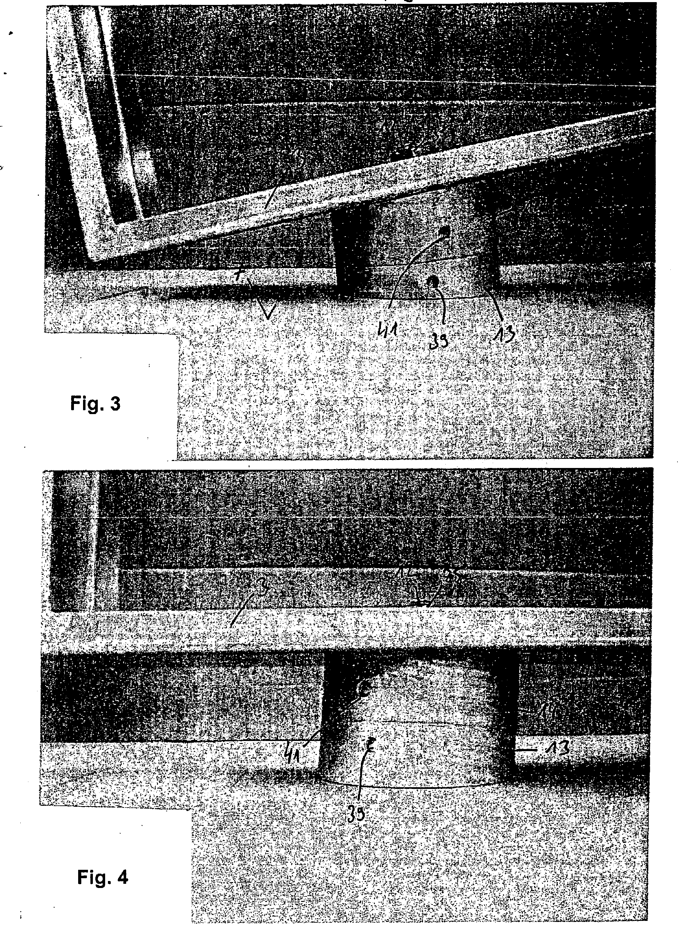

Es wird nunmehr Bezug genommen auf die Figuren 3 und 4, in denen zwei unterschiedliche Ausrichtungen des Gehäuses 3 dargestellt sind, womit gezeigt wird, wie durch einfache Verstellung bzw. Verdrehung der Rohrstücke 13 und 14 die entsprechende Neigung des Gehäuses 3 verwirklicht wird. In Fig. 3 ist eine maximale Neigung dargestellt und in Fig. 4 ist eine minimale Neigung dargestellt, in der die entsprechende Seitenwand des Gehäuses 3 im Wesentlichen ohne Neigung gehalten wird.

Weiterhin ist aus den Figuren 3 und 4 im Rohrstück 13 und 14 eine Eingriffseinrichtung 39 für das Rohrstück 13 bzw. 41 für das Rohrstück 14 in Form einer Öffnung in der Seitenwand des Rohrstücks dargestellt.

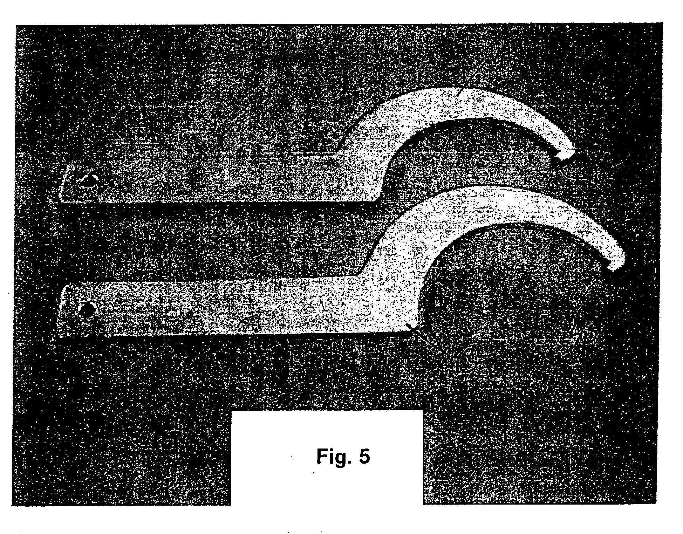

In Fig. 5 sind entsprechende Werkzeuge in Form von Hakenschlüsseln 43 dargestellt, die jeweils einen Haken 45 aufweisen, der für den Eingriff in die Eingriffseinrichtungen 39 beziehungsweise 41 geeignet ist.

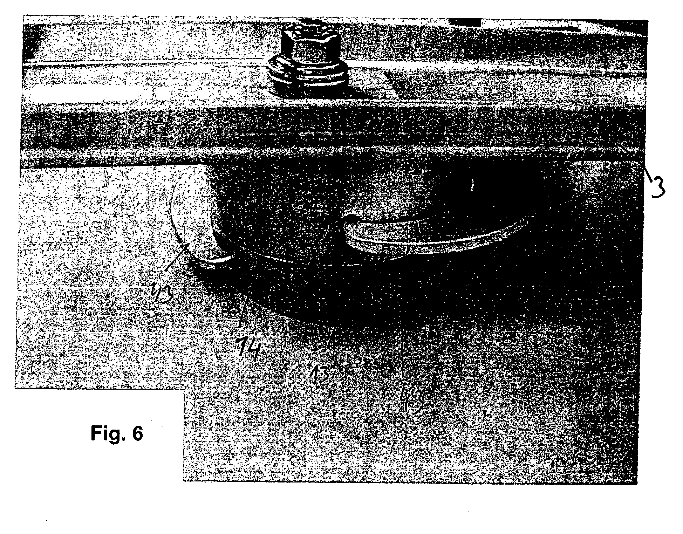

Die Verwendung der beiden Hakenschlüssel ist in Fig. 6 dargestellt. Hieraus ist leicht ersichtlich, dass durch entsprechendes Drehen am Hakenschlüssel 43 eine entsprechende Drehung des damit in Eingriff stehenden Rohrstücks 13 bzw. 14 ermöglicht wird, wodurch eine einfache und exakte Einstellung für die entsprechende Neigung des Gehäuses 3 ermöglicht wird.

Durch den Schlitz 19 gemäß Fig. 1 in der Führungshülse 17 wird erreicht, dass die Führungshülse 17 federnd zusammengedrückt werden kann, und damit in das jeweilige Rohrstück 13 bzw. 14 eingeführt werden kann und nach Einführen wieder auffedern kann, wodurch eine reibschlüssige Verbindung zwischen Führungshülse und dem jeweiligen Rohrstück 13 bzw. 14 erzeugt wird.

Insgesamt wird mit der erfindungsgemäßen Halterungsvorrichtung 1 somit eine wirksame, sehr effiziente, leicht zu montierende und leicht und universell einzustellende Halterungsvorrichtung geschaffen, die sich insbesondere für geneigte bzw. gewölbte Montageflächen eignet, und einen kleinstmöglichen Platzbedarf für die Montage schafft.

Vorteilhafterweise kann die Halterungsvorrichtung nicht nur an Wänden eingesetzt werden, sondern findet Anwendung an allen Flächen geneigt oder auch nicht. So kann sie beispielsweise an Stahlträgern von Brücken eingesetzt werden, wo sie leicht montierbar ist. Dabei kann vorteilhafterweise ein Anschlußkabel durch die Halterungsvorrichtung vorgesehen sein und mit der Anzeigeeinrichtung im Gehäuse 3 verbunden sein, wodurch eine sichere Kabelzuführung geschaffen wird, die vorteilhafterweise gegen Vandalismus schützt.

## Patentansprüche

1. Universell einstellbare Halterungsvorrichtung (1), die zur Halterung eines Gegenstandes, insbesondere eines Gehäuses (3) dient, mit
- mindestens einem Verankerungselement, bevorzugt einem Gewindeanker (9), das in einem Element (5) verankerbar ist, das die Halterungsvorrichtung (1) trägt,
- zwei Rohrstücken (13, 14), die einen im Wesentlichen gleichen Durchmesser aufweisen,
- einer Zentrierplatte (23) die eine Durchtrittsöffnung (25) für das Verankerungselement (9) aufweist,
- wobei beide Rohrstücke (13, 14) einen ersten ebenen Rand (15; 16) aufweisen, der in einer ersten Ebene liegt, die senkrecht zu der Rohrachse (X) verläuft, und einen zweiten Rand (21 bzw. 22) aufweisen, der in einer zweiten Ebene liegt, die schräg bezüglich der ersten Ebene verläuft, und **dadurch gekennzeichnet, daß**
- die Halterungsvorrichtung (1) einer Führungshülse (17) aufweist, die als Verbindung der beiden Rohrstücke (13, 14) dient, wobei deren Breite geringer als die Gesamtbreite der beiden Rohrstücke (13, 14) ist, und die innerhalb der Rohrstücke (13, 14) anordenbar ist,
- daß die Zentrierplatte (23), zur Zentrierung der Führungshülse (17) bezüglich des Verankerungselements (9) dient;
- die Halterungsvorrichtung (1) einer Duckplatte (31) aufweist mit einer Öffnung (33) für das Verankerungselement (9) ,
- und daß die Druckplatte (31) mittels entsprechender Befestigungsmittel (35, 37) den Gegenstand gegen den entsprechenden Rand (22) der nächstgelegenen Rohrhülse (14) drückt und fixiert und damit die Halterungsvorrichtung (1) an der Montagefläche (7) des Elements (5) fixierbar ist.

2. Halterungsvorrichtung (1) nach Anspruch 1, **dadurch gekennzeichnet, dass** die Schräge der zweiten Ebene bezüglich der ersten Ebene eines jeden der Rohrstücke (13, 14) gleich oder im Wesentlichen gleich ist.

3. Halterungsvorrichtung (1) nach Anspruch 1 oder 2, **dadurch gekennzeichnet, dass** die Rohrstücke runde Rohrstücke (13, 14) sind.

4. Halterungsvorrichtung (1) nach einem der Ansprüche 1 bis 3, **dadurch gekennzeichnet, dass** durch Verdrehen der Rohrstücke (13, 14) sowohl gegenüber der Montagefläche (7) als auch gegenüber dem Gegenstand (3) die Neigung des Gegenstandes (3) bezüglich der Montagefläche (7) einstellbar ist.

5. Halterungsvorrichtung (1) nach einem der Ansprüche 1 bis 4, **dadurch gekennzeichnet, dass** die Rohrstücke (13, 14) untereinander verdrehbar sind.

6. Halterungsvorrichtung (1) nach einem der Ansprüche 1 bis 5, **dadurch gekennzeichnet, dass** wenigstens eines der Rohrstücke, bevorzugt beide Rohrstücke (13, 14) eine Eingriffseinrichtung (39, 41) für ein Werkzeug (43) aufweisen.

7. Halterungsvorrichtung (1) nach Anspruch 6, **dadurch gekennzeichnet, dass** die Eingriffseinrichtung (39, 41) eine Öffnung in der Wand des Rohrstückes (13, 14) ist, in das ein geeignetes Werkzeug, wie beispielsweise ein Hakenschlüssel (43) eingreifen kann.

8. Halterungsvorrichtung (1) nach einem der Ansprüche 1 bis 7, **dadurch gekennzeichnet, dass** die Führungshülse (17) einen Schlitz (19) in ihrer Seitenwand aufweist, der im Wesentlichen parallel zu ihrer Drehachse (X) verläuft.

9. Halterungsvorrichtung (1) nach einem der Ansprüche 1 bis 8, **dadurch gekennzeichnet, dass** die Rohrstücke (13, 14) aus Metall oder aus Kunststoff gebildet sind.

10. Halterungsvorrichtung (1) nach einem der Ansprüche 1 bis 9, **dadurch gekennzeichnet, dass** die Führungshülse (17) aus einem elastisch federnden Material gebildet ist.

## Claims

1. Universally adjustable mounting device (1), which serves to mount an object, in particular a housing (3), comprising:
- at least one anchoring member, preferably one threaded anchor (9), which is anchorable in a member (5), which carries the mounting device (1),
- two pipe members (13, 14) having substantially the same diameter,
- one centering plate (23) having a through hole (25) for the anchoring member (9),
- wherein both pipe members (13, 14) comprising a first planar edge (15, 16) which lies in a first plane, which extends perpendicular to the pipe axis (X), and a second edge (21 and 22 respectively) which lies in a second plane inclined in relation to the first plane, and **characterised in that**:
- the mounting device (1) has a guide sleeve (17) which serves as connection of the two pipe members (13, 14), wherein their width is smaller than the total width of the two pipe members (13, 14), and which can be arranged inside the pipe members (13, 14),
- the centering plate (23) serves to center the guide sleeve (17) in relation to the anchoring member (9),
- the mounting device (1) has a pressure plate (31) having an orifice (33) for the anchoring member (9), and that
- the pressure plate (31) pushes and fastens the object against the edge (22) of the nearest pipe sleeve (14) by means of corresponding fastening means (35, 37), so that the mounting device (1) can be fastened on the mounting surface (7) of the member (5).

2. Mounting device (1) according to claim 1, **characterised in that** the slant of the second plane in relation to the first plane of each of the pipe members (13, 14) is identical or substantially identical.

3. Mounting device (1) according to claim 1 or 2, **characterised in that** the pipe members are round pipe members (13, 14).

4. Mounting device (1) according to one of the claims 1 to 3, **characterised in that** the tilt of the object (3) in relation to the mounting surface (7) is adjustable by rotating the pipe members (13, 14) in relation to both the mounting surface (7) and the object (3).

5. Mounting device (1) according to one of the claims 1 to 4, **characterised in that** the pipe members (13, 14) are rotatable relative to one another.

6. Mounting device (1) according to one of the claims 1 to 5, **characterised in that** at least one of the pipe members, preferable both pipe members (13, 14) having an engaging device (39, 41) for a tool.

7. Mounting device (1) according to claim 6, **characterised in that** the engaging device (39, 41) is an orifice in the wall of the pipe member (13, 14), into which a suitable tool, for example a hook spanner (43) can engage.

8. Mounting device (1) according to one of the claims 1 to 7, **characterised in that** the guide sleeve (17) comprises a slit (19) in its lateral wall extending substantially parallel to its axis of rotation (X).

9. Mounting device (1) according to one of the claims 1 to 8, **characterised in that** the pipe members (13, 14) are made of metal or plastic.

10. Mounting device (1) according to one of the claims 1 to 9, **characterised in that** the guide sleeve (17) is made of an elastically resilient material.

## Revendications

1. Support universel ajustable (1), qui sert à la fixation d'un objet, en particulier d'un carter (3), comprenant
- au moins un élément d'ancrage, de préférence un ancrage fileté (9), qui peut être ancré dans un élément (5) supportant le support (1),
- deux pièces tubulaires (13, 14), qui présentent un diamètre essentiellement égal,
- une plaque de centrage (23), qui présente une ouverture de passage (25) pour l'élément d'ancrage (9),
- les deux pièces tubulaires (13, 14) présentant un premier bord plan (15 ; 16), qui se situe dans un premier plan perpendiculaire à l'axe (X) des tubes, et un second bord (21 ou 22), qui se situe dans un second plan en oblique par rapport au premier plan,
**caractérisé en ce que**
- le support (1) présente un manchon de guidage (17), qui sert de jonction des deux pièces tubulaires (13, 14), manchon dont la largeur est plus faible que la largeur totale des deux pièces tubulaires (13, 14) et qui peut être disposé à l'intérieur des pièces tubulaires (13, 14),
- la plaque de centrage (23) sert à centrer le manchon de guidage (17) par rapport à l'élément d'ancrage (9),
- le support (1) présente une plaque de serrage (31), avec une ouverture (33) pour l'élément d'ancrage (9), et
- la plaque de serrage (31) presse et fixe l'objet, à l'aide de moyens de fixation correspondants (35, 37), contre le bord correspondant (22) du manchon tubulaire (14) le plus proche, et le support (1) peut être ainsi fixé sur la surface de montage (7) de l'élément (5).

2. Support (1) suivant la revendication 1, **caractérisé en ce que** l'obliquité du second plan par rapport au premier plan de chacune des pièces tubulaires (13, 14) est égale ou essentiellement égale.

3. Support (1) suivant l'une des revendications 1 et 2, **caractérisé en ce que** les pièces tubulaires sont des pièces tubulaires rondes (13, 14).

4. Support (1) suivant l'une des revendications 1 à 3, **caractérisé en ce que** l'inclinaison de l'objet (3) par rapport à la surface de montage (7) est réglable par rotation des pièces tubulaires (13, 14), aussi bien par rapport à la surface de montage (7) que par rapport à l'objet (3).

5. Support (1) suivant l'une des revendications 1 à 4, **caractérisé en ce que** les pièces tubulaires (13, 14) peuvent tourner entre elles.

6. Support (1) suivant l'une des revendications 1 à 5, **caractérisé en ce qu'**au moins l'une des pièces tubulaires, de préférence les deux pièces tubulaires (13, 14), présentent un dispositif de prise (39, 41) pour un outil (43).

7. Support (1) suivant la revendication 6, **caractérisé en ce que** le dispositif de prise (39, 41) est une ouverture dans la paroi de la pièce tubulaire (13, 14), dans laquelle peut s'engager un outil adéquat, tel que par exemple une clé à ergot (43).

8. Support (1) suivant l'une des revendications 1 à 7, **caractérisé en ce que** le manchon de guidage (17) présente une fente (19) dans sa paroi latérale, laquelle fente s'étend de façon essentiellement parallèle à l'axe de rotation (X) de ce dernier.

9. Support (1) suivant l'une des revendications 1 à 8, **caractérisé en ce que** les pièces tubulaires (13, 14) sont formées de métal ou de matière plastique.

10. Support (1) suivant l'une des revendications 1 à 9,
**caractérisé en ce que** le manchon de guidage (17) est formé d'un matériau à élasticité de ressort.
